# NEUE EUROPÄISCHE PATENTSCHRIFT

(11) **EP 0 734 494 B2**
(45) Veröffentlichungstag und Bekanntmachung des Hinweises auf die Entscheidung über den Einspruch: **28.05.2003**
(45) Hinweis auf die Patenterteilung: 22.07.1998
(21) Anmeldenummer: 95904489.2
(22) Anmeldetag: 16.12.1994
(51) Int. Cl.: F04B 53/12

(54) **KOLBENPUMPE ZUM FÖRDERN VON HYDRAULIKFLÜSSIGKEIT**
RECIPROCATING PUMP FOR PUMPING HYDRAULIC FLUID
POMPE A PISTON POUR L'ACHEMINEMENT D'UN FLUIDE HYDRAULIQUE

(30) Priorität: 17.12.1993 DE 9319462 U
(43) Veröffentlichungstag der Anmeldung: 02.10.1996
(73) Patentinhaber: Lucas Industries Limited, West Midlands B90 4LA (GB)
(72) Erfinder: ZINNKANN, Ulrich, D-56070 Koblenz (DE); GEGALSKI, Helmut, D-56218 Mühlheim-Kärlich (DE)
(74) Vertreter: Schmidt, Steffen J., Dipl.-Ing.
(86) Internationale Anmeldenummer: EP9404186
(87) Internationale Veröffentlichungsnummer: WO95016859

(56) Entgegenhaltungen:
- EP-A- 0 637 690
- DE-A- 1 902 235
- DE-A- 4 020 449
- DE-A- 4 242 420
- DE-U- 7 225 979
- FR-A- 1 379 727
- GB-A- 2 253 882
- GB-A- 2 253 884
- US-A- 2 521 164
- US-A- 4 354 715
- US-A- 4 778 161

## Beschreibung

Die Erfindung betrifft eine Kolbenpumpe zum Fördern von Hydraulikflüssigkeit, insbesondere in einer blockiergeschützten Fahrzeugbremsanlage mit den Merkmalen des Oberbegriffs des Anspruches 1.

Bei Verwendung in einer blockiergeschützten Bremsanlage (ABS) und/oder einer Antriebsschlupfregelanlage (ASR) eines Fahrzeuges dient eine solche Pumpe der Förderung der Bremshydraulikflüssigkeit in den Hauptbremszylinder und/oder in die Fahrzeugbremsen, um in bekannter Weise im Rahmen von ABSoder ASR-Regelzyklen Bremswirkung zu erzielen.

Im Stand der Technik sind bei solchen Kolbenpumpen die Einlaßund Auslaßventile üblicherweise in der Pumpenlängsachse angeordnet. Diese Pumpen werden als Radialkolbenpumpen bezeichnet. Entlang der Längsachse einer solchen Pumpe führt ein Kolben Arbeitshübe aus, um die Hydraulikflüssigkeit in Richtung auf die Fahrzeugbremse zu fördern. Der Kolben ist beim Stand der Technik in einer fest mit dem Pumpengehäuse verbundenen Gleitbuchse aufgenommen und das Einlaß- sowie das Auslaßventil sind üblicherweise jeweils auf der Pumpenlängsachse angeordnet.

Ein solcher Stand der Technik ist aus der DE-A-32 36 536, DE-A-37 42 824 und der DE-A-40 27 794 bekannt.

Bei diesem Stand der Technik müssen der Kolben, das Einlaßventil und eine Rückstellfeder für den Kolben jeweils zunächst in einer Gleitbuchse montiert werden, die die Bauteile zusammenhält. Die Gleitbuchse mit den genannten montierten Teilen kann dann als Unterbaugruppe in das Gehäuse des Ventils eingefügt werden. Ein solcher Aufbau der Kolbenpumpe ist hinsichtlich der Zahl der Bauteile und ihrer Montage aufwendig.

Die US 4,354,715 A beschreibt ein hydraulisches Anti-Blockiersystem mit einer Kolbenanordnung, die zum Fördern von Hydraulikflüssigkeit in ein mit einem Hauptbremszylinder verbundenes Reservoir einer Fahrzeugbremsanlage dient. Die Kolbenanordnung umfaßt einen Kolben in dem eine Ventilbaugruppe angeordnet ist. Der Kolben ist durch eine Rückstellfeder in Richtung auf einen Antrieb vorgespannt. Ferner ist in der Kolbenanordnung ein Signalkolben angeordnet, an dem sich die Rückstellfeder abstützt und der den Kolben in eine vom Antrieb unbetätigte Stellung verschieben kann. Der Signalkolben ist dazu mit dem Kolben verschiebbar gekoppelt und bildet dabei eine eigenständig handhabbare Baugruppe aus Kolben, Ventilbaugruppe, Rückstellfeder und Signalkolben. Die in der US 4,354,715 A beschriebene Kolbenanordnung weist dabei eine Vielzahl Bauteile auf, so daß sie verhältnismäßig teuer herzustellen und aufwendig zu montieren ist.

Der Erfindung liegt die Aufgabe zugrunde, eine Kolbenpumpe der eingangs genannten Art so weiterzubilden, daß der Herstellungsund Montageaufwand verringert sind.

Diese Aufgabe wird erfindungsgemäß durch die Merkmale des Anspruchs 1 gelöst.

Die Erfindung ermöglicht eine Verringerung des Herstellungsund Montageaufwandes einer Kolbenpumpe auch dadurch, daß auf die im Stand der Technik verwendete Gleitbuchse verzichtet wird und statt dessen der Kolben und die Ventilbaugruppe direkt in das Pumpengehäuse einbaubar sind. Der "direkte" Einbau der genannten Teile in das Pumpengehäuse bedeutet, daß keine besondere Gleitbuchse zwischen dem Kolben sowie der Ventilbaugruppe und dem diese Teile umschließenden Gehäuse angeordnet ist.

Dabei ist das die Zusammenfügung der Baugruppe ermöglichende Bauteil bevorzugt ein Blechformteil der Ventilbaugruppe.

Die erfindungsgemäße Handhabung der Bauteile Kolben, Einlaßventil und Rückstellfeder als eigenständige Unterbaugruppe der Kolbenpumpe hat den Vorteil, daß eine einfache und vor allem lageunabhängige Montage möglich ist, da diese Unterbaugruppe direkt in den Pumpenkörper (Gehäuse) eingesetzt werden kann, und zwar ohne vorherigen Einbau in eine Gleitbuchse und ohne eine besondere Positionierung des Gehäuses.

Die Zusammenfügung der genannten Bauteile erfolgt vorzugsweise mittels formschlüssiger Verbindungen und elastischem Eingriff der Teile miteinander.

Die Ausformung des die genannten Komponenten zusammenfügenden Bauteils in Form eines Blechformteils hat den Vorteil, daß ein solches Blechformteil in einem Stanz- und Biegeprozeß herstellbar ist. Dabei lassen sich Durchlaßöffnungen für die Hydraulikflüssigkeit in dem Blechformteil direkt durch eine entsprechende Formgebung des Blechteils herstellen. Das Blechformteil dient bevorzugt auch als Federkäfig für eine Feder der Ventilbaugruppe. Beim Stand der Technik werden solche Federkäfige üblicherweise durch ein Tiefziehverfahren oder Spritzgußverfahren hergestellt und die Durchlaßöffnungen für die Hydraulikflüssigkeit müssen in einem zusätzlichen Arbeitsgang hergestellt werden, was den Herstellungsaufwand und damit die Kosten erhöht.

Die oben genannten erfindungsgemäßen Maßnahmen ermöglichen nicht nur eine Vereinfachung der Herstellung und der Montage der Kolbenpumpe, sondern darüber hinaus auch eine Vereinfachung der Demontage der Kolbenpumpe, da weniger Teile ausgebaut werden müssen und der Ausbau überdies auch dadurch vereinfacht ist, daß einige der Komponenten in miteinander verbundenem Zustand als eigenständig handhabbare Baugruppe aus der Kolbenpumpe entnehmbar sind.

In einer weiteren, bevorzugten Ausführungsform sind der Kolben und das Blechformteil so gestaltet, daß das Blechformteil durch den Kolben formschlüssig gehalten ist. Dies kann beispielsweise durch einen radial abstehenden Bund oder Halterand realisiert sein, der von dem Blechformteil formschlüssig umgriffen ist.

In einer vorteilhaften Ausgestaltung weist der Kolben an seinem Umfang zumindest eine Dichtung auf, die den Kolben gegen eine Bohrung des Gehäuses abdichtet, in der der Kolben gleitend verschiebbar geführt ist. Vorzugsweise weist dazu der Kolben einen Absatz auf, an dem die Dichtung aufgenommen ist, wobei im montierten Zustand die Dichtung in Richtung auf den Absatz durch die Rückstellfeder vorgespannt ist. Wenn das Blechformteil mehrere Arme aufweist, von denen zumindest einer an seinem freien Ende in radialer Richtung (nach außen oder nach innen) abgewinkelt ist, kann durch diese freien Enden die Dichtung in den Absatz des Kolbens unter der Vorspannung der Rückstellfeder eingepreßt werden. Dies hat einen stabilen und sicheren Sitz der Dichtung in dem Absatz zur Folge.

Nachfolgend wird ein Ausführungsbeispiel der Erfindung anhand der Zeichnung näher erläutert. Es zeigt:
- Fig. 1: schematisch eine Kolbenpumpe in zwei verschiedenen Betriebszuständen;
- Fig. 2: ein Blechformteil zur Verwendung in einer Kolben pumpe gemäß Fig. 1 in Draufsicht und zwar vor der endgültigen Formgebung;
- Fig. 3: einen Schnitt entlang der Linie A-A gemäß Fig. 2;
- Fig. 4: eine Seitenansicht eines fertig geformten Blechform teils;
- Fig. 5: eine axiale Draufsicht auf ein Blechformteil gemäß Fig. 4;
- Fig. 6: ein Detail gemäß Fig. 1 in vergrößertem Maßstab,
- Fig. 7: ein Detail aus Fig. 6 in vergrößertem Maßstab; und
- Fig. 8: eine Baugruppe einer Kolbenpumpe gemäß Fig. 1 in zwei verschiedenen Betriebszuständen des Einlaßventils in einer zweiten Ausführungsform.

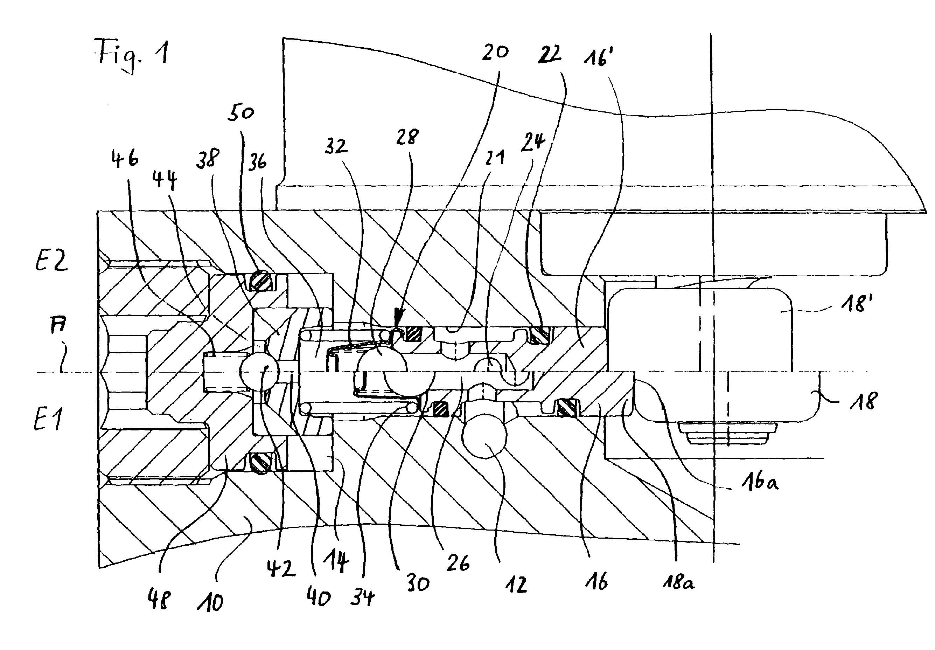

Gemäß Fig. 1 weist eine Kolbenpumpe ein Gehäuse 10 auf, das den Pumpenkörper bildet. Die Pumpe dient dazu, Hydraulikflüssigkeit in einer Fahrzeugbremsanlage zu fördern, insbesondere in einer ABSund/oder ASR-Bremsanlage.

Die Hydraulikflüssigkeit gelangt über einen Einlaß 12 in das Gehäuse 10 und wird mittels der Pumpe unter Druck aus einem Auslaß 14 aus dem Gehäuse 10 gefördert, und zwar zu einer (nicht gezeigten) Fahrzeugbremse.

Im Gehäuse 10 ist ein Kolben 16 so gelagert, daß er entlang der Längsachse A der Pumpe abgedichtet bewegbar ist. Ein Antrieb 18 bewegt den Kolben 16 im Gehäuse 10. In bekannter Weise dient als Antrieb 18 ein Exzenter, der über eine Anschlagfläche 18a gegen eine Stirnfläche 16a des Kolbens 16 drückt und dabei den Kolben in Fig. 1 nach links bewegt. In Fig. 1 sind zwei verschiedene Stellungen der Bauteile dargestellt. Unterhalb der Längsachse A der Kolbenpumpe sind der Kolben 16 und die mit ihm bewegten Bauteile in einer ersten Extremstellung El gezeichnet, in der die Bauteile sich in der Figur am weitesten rechts befinden, während oberhalb der Längsachse A sich die Bauteile in ihrer am weitesten links gelegenen zweiten Extremstellung E2 befinden.

Mit dem Kolben 16 ist eine Ventilbaugruppe 20 verbunden. Eine Dichtung liegt zwischen dem Kolben 16 und einer zentralen Bohrung 21 im Gehäuse 10, in welcher der Kolben 16 beweglich ist.

Zu fördernde Hydraulikflüssigkeit gelangt über den Einlaß 12 und einen Durchlaß 24 in einen Innenraum 26, der im Kolben 16 ausgeformt ist. Am in Förderrichtung gelegenen Stirnende des Kolbens 16 ist ein Ventilsitz 30 ausgeformt, an den eine Kugel 28 paßgenau (abdichtend) anlegbar ist.

Ein Blechformteil 32 ist am Kolben 16 befestigt. Das Blechformteil 32 und seine Befestigung am Kolben 16 sind weiter unten anhand der Figuren 2 bis 7 näher erläutert.

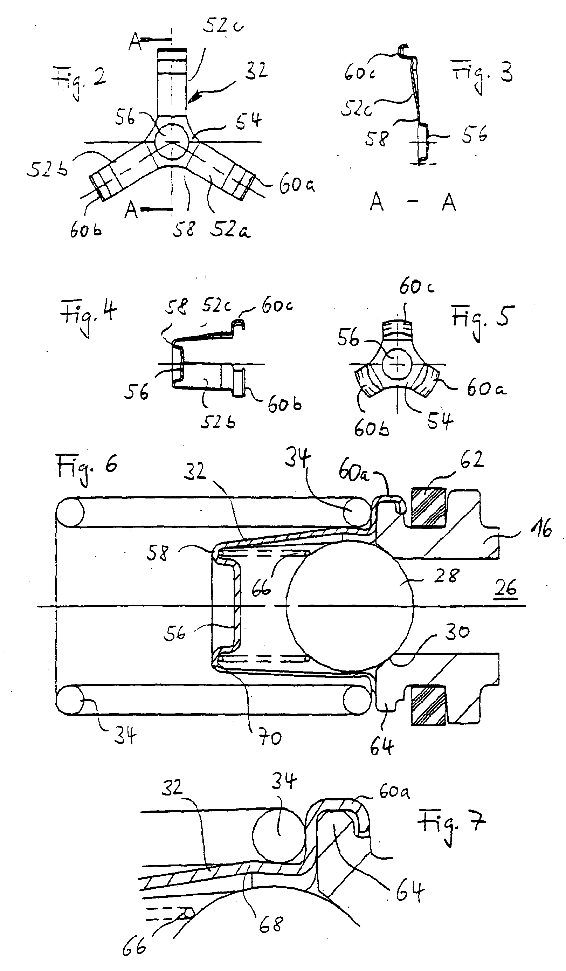

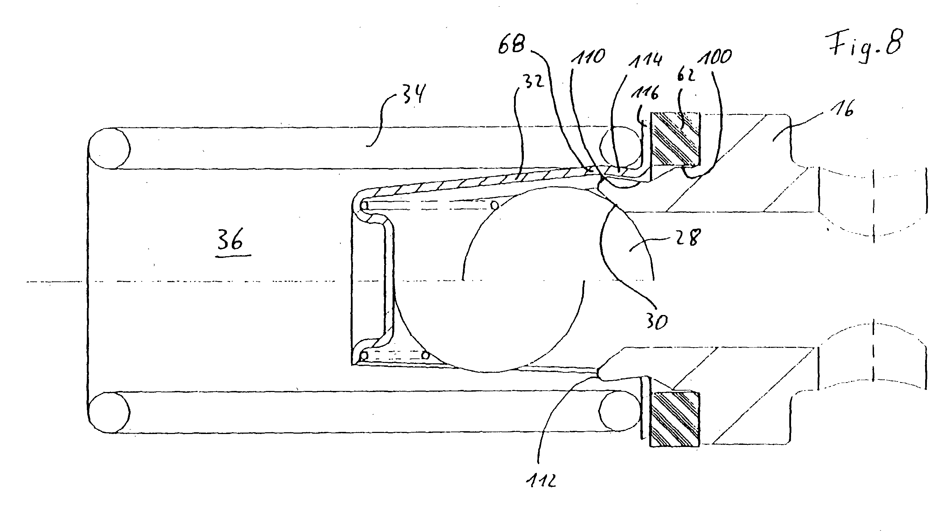

Eine Rückstellfeder 34 spannt den Kolben 16 in Fig. 1 nach rechts, d. h. in Richtung auf den Antrieb 18. Die Rückstellfeder 34 ist formschlüssig auf das Blechformteil 32 aufgeschoben, wie ebenfalls weiter unten anhand der Figuren 6 und 7 näher erläutert ist.

Im Gehäuse 10 ist stromab der als Ventilschließglied dienenden Kugel 28 ein Raum 36 ausgeformt, der Hydraulikflüssigkeit aufnimmt. Das Blechformteil 32 ist mit Durchlässen (vgl. Fig. 4 und 5) versehen, so daß eine permanente gleitende Verbindung zwischen dem inneren des Blechformteils 32 und dem Raum 36 gegeben ist.

Ein Ventilkörper 38 ist fest (unbeweglich) mit dem Gehäuse 10 verbunden und weist einen zentralen Kanal 40 auf, durch den Hydraulikflüssigkeit in Fig. 1 nach links (in Förderrichtung) strömen kann, wenn eine Kugel 42 gegen die Kraft einer Feder 46 einen Sitz am Ausgang des Kanals 40 öffnet. Die Hydraulikflüssigkeit strömt dann über einen Kanal 44 zum Auslaß 14.

Ein Endteil 48 ist ebenfalls starr mit dem Gehäuse 10 verbunden und bildet einen Käfig für die Feder 46. Der Strömungsweg zum Auslaß 14 ist über eine Dichtung 50 abgedichtet.

Die Kolbenpumpe gemäß Fig. 1 arbeitet als Saugpumpe. In der in Fig. 1 unterhalb der Längsachse A dargestellten Extremstellung El des Kolbens 16 befindet sich Hydraulikflüssigkeit im Innenraum 26 des Kolbens. Wird dann der Kolben 16 mittels des Antriebes 18 in einem Förder-Antriebshub in die in Fig. 1 oberhalb der Längsachse A dargestellte Extremstellung E2(Stellungen 18' des Antriebes bzw. 16' des Kolbens) bewegt, verbleibt die Kugel 28 dicht auf dem zugeordneten Ventilsitz 30 und die im Raum 36 befindliche Hydraulikflüssigkeit wird aufgrund der Kolbenbewegung unter hohen Druck gesetzt. Dieser Druck bewegt die Kugel 42 gegen die Kraft der relativ schwachen Feder 46, so daß Hydraulikflüssigkeit über die Kanäle 40, 44 zum Auslaß 14 strömt und somit unter hohem Druck zur Fahrzeugbremse gefördert wird. Nachdem der Kolben die in Fig. 1 oberhalb der Längsachse A dargestellte Extremstellung E2 erreicht hat, zieht sich der Exzenter-Antrieb wieder in die Extremstellung E1 (dies ist die Ausgangsstellung) zurück, so daß der Kolben 16 aufgrund der relativ starken Vorspannkraft der Rückstellfeder 34 nach rechts gedrückt wird. Dabei liegt die Kugel 42 abdichtend an dem ihr zugeordneten Sitz des Ventilkörpers 38 an. Die Kraft der Feder 34 bewirkt bei der Bewegung des Kolbens 16 in Fig. 1 nach rechts einen Unterdruck im Raum 36 (der mit Hydraulikflüssigkeit gefüllt ist), so daß die Kugel 28 vom Ventilsitz 30 abhebt und somit eine leitende Verbindung für Hydraulikflüssigkeit zwischen dem Innenraum 26 und dem Raum 36 gegeben ist (das Blechformteil 32 weist Öffnungen auf, wie oben bereits erläutert ist). Somit strömt bei einer Bewegung des Kolbens 16 in Fig. 1 von links nach rechts Hydraulikflüssigkeit zwischen der Kugel 28 und dem Ventilsitz 30 in den Raum 36, der bei dieser Bewegung sein Volumen vergrößert. Nachdem der Kolben 16 seine in Fig. 1 unterhalb der Längsache A dargestellte Extremstellung EI erreicht hat, beginnt ein neuer Förder-Arbeitshub des Kolbens aufgrund einer Bewegung des Exzenters 18 nach links, wie oben beschrieben ist.

Aus der vorstehenden Beschreibung der Kolbenpumpe ergibt sich, daß zwischen dem Kolben 16 und der Ventilbaugruppe 20 (welche zumindest aus der Kugel 28, ihrem Sitz 30 und dem Blechformteil 32 besteht) und der Bohrung 21 im Gehäuse 10 keine Gleitbuchse als zusätzliches Bauteil angeordnet ist.

Beim Zusammenbau der Kolbenpumpe (und entsprechend auch bei ihrer Demontage) sind der Kolben 16 und die Ventilbaugruppe 20 zu einer eigenständig handhabbaren Baugruppe zusammengefügt. Dies ist in den Figuren 2 bis 7 näher beschrieben.

Fig. 2 zeigt das Blechformteil 32 vor seiner endgültigen Formgebung. Es weist drei Arme 52a, b, c auf. Statt dessen können auch vier oder mehr Arme vorgesehen sein.

Die Arme des Blechformteils 32 münden integral in einen Boden 54, in dem mittig eine Vertiefung 56 eingedrückt ist (vgl. Fig. 3).

An ihren freien Enden sind die Arme 52a, b, c jeweils mit einer Klammer 60a, b, c versehen, die zur Befestigung des Blechformteils 32 am Kolben 16 dienen (vgl. Fig. 6).

Das Blechformteil 32 gemäß Fig. 2 kann in einfacher Weise gestanzt werden. Die Klammem 60a, b, c werden an den freien Enden der Arme 52a, b, c gebogen.

An einer Biegestelle 58 (vgl. Fig. 3, 4) werden die Arme 52a, b, c so abgebogen, daß das Blechformteil 32 einen Käfig gemäß den Fig. 4 und 6 bildet.

Aufgrund der in den Fig. 4 und 6 dargestellten Formgebung des Blechformteils 32 wird an der Biegestelle 58 mittels der Vertiefung 56 ein Federsitz für eine Feder 66 gebildet, welche die Kugel 28 in Richtung auf den Ventilsitz 30 vorspannt. Dabei ist die Kraft der Feder 66 so bemessen, daß sich die Kugel 28 bei der oben beschriebenen Bewegung des Kolbens 16 in Fig. 1 nach rechts vom Ventilsitz 30 abhebt.

Die Befestigung des Blechformteils 32 am Kolben 16 erfolgt mittels der Klammern 60a, b, c auf einer umlaufenden Nase 64 des Kolbens 16. Der Kolben 16 ist mittels einer Dichtung 62 in der Bohrung 21 des Gehäuses 10 abgedichtet geführt.

Die Rückstellfeder 34 ist gemäß den Fig. 6 und 7 so auf das Blechformteil 32 aufgeschoben, daß sie dort formschlüssig befestigt ist und nur mit Kraftaufwand vom Blechformteil abgezogen werden kann. Hierzu ist das Blechformteil 32 im fertig gebogenen Zustand gemäß den Fig. 4 und 6 leicht konisch geformt und bildet eine Haltekante 68, die einen solchen Abstand von den Klammern 60a, b, c an den freien Enden der Arme 52a, b, c aufweist, daß ein Ende der Rückstellfeder 34 über die Haltekante 68 schiebbar ist und elastisch in eine Vertiefung zwischen der Haltekante 68 und den Klammem 60 eingreift (vgl. Fig. 7) und somit die formschlüssige Befestigung der Rückstellfeder 34 am Blechformteil 32 ermöglicht.

Bei der Montage der Kolbenpumpe gemäß Fig. 1 können somit die Ventilbaugruppe 20, bestehend aus dem Blechformteil 32, der Feder 66 und der Kugel 28 mittels der Klammern 60a, b, c am Kolben 16 befestigt werden und es kann die Rückstellfeder 34 ebenfalls am Blechformteil 32 in der beschriebenen Weise befestigt werden. Hierzu ist keine Gleitbuchse erforderlich und die so gebildete Baugruppe aus den Bauteilen 16, 28, 66, 32 und 34 kann als ganzes in das Gehäuse 10 der Pumpe eingeschoben werden, wobei keine besondere Positionierung des Gehäuses (vertikal oder horizontal oder dergleichen) erforderlich ist.

In Fig. 8 ist eine Baugruppe einer Kolbenpumpe gemäß Fig. 1 in zwei verschiedenen Betriebszuständen des Einlaßventils in einer zweiten Ausführungsform veranschaulicht. Dabei sind gleiche Teile mit gleichen Bezugszeichen wie in Fig. 1 versehen und nachstehend nicht nochmals im Detail erläutert.

Die Dichtung 62 dient dazu, den Kolben 16 in der Bohrung 21 in dem Gehäuse 10 fluiddicht abzudichten, so daß die Pumpwirkung der Kolbenpumpe gewährleistet ist. Aufgrund von Toleranzen kann die Dichtung 62 sowohl radiales als auch axiales Spiel in Bezug auf den Kolben 16 haben. Die Dichtung 62 ist in einem Absatz 100 an dem der Kugel 28 zugewandten Ende des Kolbens aufgenommen. Um eine möglichst lange Lebensdauer und einen sicheren Betrieb zu gewährleisten, ist die Dichtung 62 vorzugsweise aus Polytetrafluorethylenmaterial hergestellt, das in der ggf. eloxierten Bohrung 21 einen reibungsarmen Dichtsitz ermöglicht. Allerdings kann mit einer Dichtung aus diesem Polytetrafluorethylenmaterial (PTFE) radiales Spiel nicht elastisch kompensiert werden. Dies kann zur Folge haben, daß bei einem Pumpenleerlauf, also wenn kein Fluid gefördert wird, stets eine geringe Fluidmenge in dem Raum 36 verbleibt, die im Druckhub des Kolbens 16 komprimiert wird. Dies kann eine unerwünschte Geräuschentwicklung zur Folge haben.

Bedingt durch die Montage tritt das radiale Spiel vorzugsweise zwischen dem Kolben 16 und der Dichtung 62 auf. Um dies zu vermeiden, ist die Dichtung 62 auf dem Absatz 100 an dem Kolben 16 fixiert.

An dem dem Ventilsitz 30 zugeordneten Ende des Kolbens 16 ist der stufenförmige Absatz 100 zur radialen und axialen Fixierung der Dichtung 62 vorgesehen. Am äußeren Umfang des Ventilsitzes 30 ist eine radial nach innen zurückversetzte Umfangsfläche 110 ausgebildet, die gegenüber dem vordersten Ende 112 des Kolbens 16 unter einem Winkel von 5° bis 35° sich verjüngt. Dadurch wird durch das vordere Ende 112 eine umlaufende Haltekante für das Blechformteil 32 gebildet. Um das Blechformteil 32 formschlüssig mit dem Kolben 16 zu verbinden bzw. das Blechformteil 32 an dem Kolben 16 formschlüssig zu befestigten, weist das Blechformteil 32 an seinem freien Ende einen nach innen gewinkelten Abschnitt 114 auf, der in seiner Formgebung der umlaufenden Fläche 110 entspricht. Das Blechformteil 32 hat äußere Enden 116, die radial nach außen abstehen und so gestaltet sind, daß sie die Dichtung 62 in axialer Richtung in den Absatz 100 drängen, wenn die in Fig. 8 dargestellte Baugruppe in der Kolbenpumpe montiert ist. Dies ist durch die Wirkung der Rückstellfeder 34 auch in drucklosem Zustand sichergestellt.

Dadurch, daß die Dichtung 62 auf den Absatz 100 vorgespannt wird, entsteht eine zusätzliche Abdichtung, die eine durch das radiale Spiel zwischen dem Kolben 16 und der Dichtung 62 hervorgerufene Undichtigkeit kompensiert.

Beim Zusammenbau wird die Dichtung 62 auf den Absatz 100 an dem Kolben aufgeschoben. Anschließend wird das Blechformteil 32 mit der darin befindlichen Kugel 28 über die Haltekante 120 geschoben, so daß die radial abstehenden Enden 116 des Blechformteils 32 an der Dichtung 62 anliegen. Dann wird die Rückstellfeder 34 auf das Blechformteil 32 aufgeschoben und greift in die durch das Ende des Blechformteils 32 gebildete Vertiefung ein. Dabei wird die Haltekante 120 des Kolbens 16 so umschlossen, daß eine formschlüssige Verbindung zwischen dem Blechformteil 32 und dem Kolben 16 durch die Rückstellfeder sichergestellt wird. Der Absatz 100 und die umlaufende Fläche 110 an dem Kolben 16 sind so bemessen, daß die Druckkraft der Rückstellfeder über die Elastizität der freien Enden 116 des Blechformteils 32 auf die Dichtung 62 einwirkt. Damit wird die Dichtung 62 auch in radialer Richtung auf dem Kolben 16 fixiert. Damit ist sichergestellt, daß kein Fluid in dem Raum 36 bei einem Pumpenleerlauf verbleibt.

## Patentansprüche

1. Fahrzeugbremsanlagenkolbenpumpe zum Fördern von Hydraulikflüssigkeit in den Hauptzylinder und/oder in die Fahrzeugbremsen der Fahrzeugbremsanlage mit
- einem Pumpengehäuse (10), das einen Einlaß (12) für Hydraulikflüssigkeit in das Gehäuse (10) und einen Auslaß (14) aufweist, durch den geförderte Hydraulikflüssigkeit aus dem Gehäuse (10) austritt,
- einem im Pumpengehäuse (10) geführten Kolben (16), der Arbeitshübe ausführt, um Hydraulikflüssigkeit vom Einlaß (12) zum Auslaß (14) zu fördern,
- einer Ventilbaugruppe (20) im Förderweg der Hydraulikflüssigkeit durch das Gehäuse (10),
- einem Antrieb (18), der den Kolben (16) zum Fördern durch das Gehäuse (10) bewegt, und
- einer Rückstellfeder (34), die den Kolben (16) in Richtung auf den Antrieb (18) vorspannt, **dadurch gekennzeichnet daß**
- der Kolben (16) direkt vom Pumpengehäuse (10) geführt ist,
- daß der Kolben (16), die Rückstellfeder (34) und die Ventilbaugruppe (20) als eigenständig handhabbare Baugruppe zusammengefügt und direkt in das Pumpengehäuse (10) eingesetzt sind, und
- daß die Baugruppe mittels eines Teils (32) der Ventilbaugruppe (20) zusammengefügt ist.

2. Kolbenpumpe nach Anspruch 1,
**dadurch gekennzeichnet, daß** die Zusammenfügung der Baugruppe mittels eines Blechformteils (32) erfolgt.

3. Kolbenpumpe nach Anspruch 2 ,
**dadurch gekennzeichnet, daß** das Blechformteil (32) durch den Kolben (16) formschlüssig gehalten ist.

4. Kolbenpumpe nach einem der Ansprüche 1 bis 3,
**dadurch gekennzeichnet, daß** das Teil bzw. Blechformteil (32) auch als Federkäfig zum Halten von zumindest einer Feder (34, 66) dient.

5. Kolbenpumpe nach einem der Ansprüche 1 bis 4,
**dadurch gekennzeichnet, daß** das Teil bzw. Blechformteil (32) die Rückstellfeder (34) trägt.

6. Kolbenpumpe nach einem der Ansprüche 2 bis 5,
**dadurch gekennzeichnet, daß** das Blechformteil (32) mehrere Arme (52a, b, c,) aufweist, von denen zumindest einer an seinem freien Ende eine Klammer (60a, b, c) zur Befestigung am Kolben (16) aufweist.

7. Kolbenpumpe nach einem der Ansprüche 2 bis 6,
**dadurch gekennzeichnet, daß** die Rückstellfeder (34) durch das Blechformteil (32) formschlüssig gehalten ist.

8. Kolbenpumpe nach einem der Ansprüche 2 bis 7,
**dadurch gekennzeichnet, daß** das Blechformteil (32) eine Haltekante (68) aufweist zur formschlüssigen Befestigung der Rückstellfeder (34).

9. Kolbenpumpe nach einem der vorhergehenden Ansprüche,
**dadurch gekennzeichnet, daß** der Kolben (16) an seinem Umfang zumindest eine Dichtung (62) aufweist, die den Kolben (16) gegen eine Bohrung (21) des Gehäuses (10) abdichtet.

10. Kolbenpumpe nach Anspruch 9,
**dadurch gekennzeichnet, daß** der Kolben (16) einen Absatz (100) aufweist, an dem die Dichtung (62) aufgenommen ist, und daß im montierten Zustand die Rückstellfeder (34) die Dichtung (62) in Richtung auf den Absatz (100) am Kolben (16) vorspannt.

11. Kolbenpumpe nach Anspruch 9 oder 10,
**dadurch gekennzeichnet, daß** das Blechformteil (32) mehrere Arme (52a, b, c) aufweist, von denen zumindest einer an seinem freien Ende in radialer Richtung abgewinkelt ist.

## Claims

1. A piston pump for vehicle brake systems for delivering hydraulic fluid into the master cylinder and/or to the vehicle brakes of the vehicle brake system, comprising
- a pump housing (10) having an inlet (12) for admission of hydraulic fluid into the housing (10) and an outlet (14) through which delivered hydraulic fluid leaves the housing (10);
- a piston (16) guided in the pump housing (10) which performs working strokes in order to supply hydraulic fluid from the inlet (12) to the outlet (14);
- a valve assembly (20) in the delivery path of the hydraulic fluid through the housing (10);
- a drive (18) which moves the piston (16) through the housing (10) for the purpose of delivery, and
- a return spring (34) which biases the piston (16) towards the drive (18),
**characterised in that**
- the piston (16) is guided directly from the pump housing (10),
- the piston (16), the return spring (34) and the valve assembly (20) are joined as an assembly capable of being handled independently and directly installed in the pump housing (10), and
- the assembly is joined by means of a part (32) of the valve assembly (20).

2. The piston pump according to Claim 1,
**characterized in that** joining of the assembly is effected by means of a shaped sheet metal part (32).

3. The piston pump according to Claim 2,
**characterized in that** the shaped sheet metal part (32) is positively secured by the piston (16).

4. The piston pump according to one of Claims 1 to 3,
**characterized in that** the part or shaped sheet metal part (32) is also used as a spring cage for holding at least one spring (34, 66).

5. The piston pump according to one of claims 1 to 4,
**characterized in that** the part or shaped sheet metal part (32) carries the return spring (34)

6. The piston pump according to one of Claims 2 to 5,
**characterized in that** the shaped sheet metal part (32) comprises several arms (52a, b, c), at least one of which is provided with a hook (60a, b, c) at its free end for fastening to the piston.

7. The piston pump according to one of Claims 2 to 6,
**characterized in that** the return spring (34) is positively secured by the shaped sheet metal part (32).

8. The piston pump according to one of Claims 2 to 7,
**characterized in that** the shaped sheet metal part (32) comprises a retaining edge (68) for positively securing the return spring (34).

9. The piston pump according to one of the preceding Claims,
**characterized in that** the piston (16) has at its circumference at least one seal (62) sealing the piston (16) against a hole (21) of the housing (10).

10. The piston pump according to Claim 9,
**characterized in that** the piston (16) comprises a shoulder (100) on which the seal (62) is accommodated, and that in installed condition the return spring (34) biases the seal (62) towards the shoulder (100) at the piston (16).

11. The piston pump according to Claim 9 or 10,
**characterized in that** the shaped sheet metal part (32) comprises several arms (52a, b, c), at least one of which is angled in radial direction at its free end.

## Revendications

1. Pompe à piston de système de freinage de véhicule pour l'alimentation en fluide hydraulique du maître-cylindre et/ou des freins de véhicule du système de freinage comprenant
- un boîtier de pompe (10) qui présente une admission (12) du fluide hydraulique dans le boîtier (10) et une sortie (14) à travers laquelle le fluide hydraulique refoulé sort du boîtier (10),
- un piston (16) guidé dans le boîtier de pompe (10) qui effectue des courses de travail pour refouler le fluide hydraulique de l'admission (12) à la sortie (14),
- un sous-groupe de soupape (20) dans le trajet de refoulement du fluide hydraulique à travers le boîtier (10),
- un dispositif moteur (18) qui déplace le piston (16) pour le refoulement à travers le boîtier (10), et
- un ressort de rappel (34) qui pousse en permanence le piston (16) en direction du dispositif moteur (18),
**caractérisé en ce que**
- le piston (16) est guidé directement par le boîtier de pompe (10),
- que le piston (16), le ressort de rappel (34) et le sous-groupe de soupape (20) sont assemblés en tant que sous-groupe pouvant être utilisé de façon autonome et sont montés directement dans le boîtier de pompe (10),
- et que le sous-groupe est assemblé au moyen d'une pièce (32) du sous-groupe de soupape (20).

2. Pompe à piston selon la revendication 1,
**caractérisée en ce que** l'assemblage du sous-groupe a lieu au moyen d'une pièce de tôle formée (32).

3. Pompe à piston selon la revendication 2,
**caractérisée en ce que** la pièce de tôle formée (32) est maintenue mécaniquement par le piston (16).

4. Pompe à piston selon l'une quelconque des revendications 1 à 3,
**caractérisée en ce que** la pièce respectivement la pièce de tôle formée (32) sert aussi de cage à ressorts pour maintenir au moins un ressort (34, 66).

5. Pompe à piston selon l'une quelconque des revendications 1 à 4,
**caractérisée en ce que** la pièce respectivement la pièce de tôle formée (32) porte le ressort de rappel (34).

6. Pompe à piston selon l'une quelconque des revendications 2 à 5,
**caractérisée en ce que** la pièce de tôle formée (32) présente plusieurs bras (52a, b, c) dont un au moins présente à son extrémité libre une agrafe (60a, b, c) pour la fixation au piston (16).

7. Pompe à piston selon l'une quelconque des revendications 2 à 6,
**caractérisée en ce que** le ressort de rappel (34) est maintenu mécaniquement par la pièce de tôle formée (32).

8. Pompe à piston selon l'une quelconque des revendications 2 à 7,
**caractérisée en ce que** la pièce de tôle formée (32) présente un bord de retenue (68) pour la fixation mécanique du ressort de rappel (34).

9. Pompe à piston selon l'une quelconque des revendications précédentes,
**caractérisée en ce que** le piston (16) présente à sa périphérie au moins un joint d'étanchéité (62) qui rend étanche le piston (16) par rapport à un alésage (21) du boîtier (10).

10. Pompe à piston selon la revendication 9,
**caractérisée en ce que** le piston (16) présente une réduction (100) dans laquelle est logé le joint d'étanchéité (62) et **en ce que** le ressort de rappel (34) pousse, à l'état monté, le joint d'étanchéité (62) dans la direction de la réduction (100) sur le piston (16).

11. Pompe à piston selon l'une quelconque des revendications 9 ou 10,
**caractérisée en ce que** la pièce de tôle formée (32) présente plusieurs bras (52a, b, c) dont un au moins est replié dans la direction radiale à son extrémité libre.
